Europäisches Patentamt

(19) European Patent Office

Office européen des brevets

(11) Publication number: **0 108 613**

**A1**

(12) **EUROPEAN PATENT APPLICATION**

(21) Application number: **83306696.2**

(22) Date of filing: **03.11.83**

(51) Int. Cl.³: **A 01 K 31/07**
**A 01 K 45/00, B 65 D 85/50**

(30) Priority: **05.11.82 GB 8231674**

(43) Date of publication of application:
**16.05.84 Bulletin 84/20**

(84) Designated Contracting States:
**AT BE CH DE FR GB IT LI LU NL SE**

(71) Applicant: **Anglia Autoflow Limited
Wortham Ling
Diss Norfolk IP22 1SR(GB)**

(72) Inventor: **Wills, David Robert
Greenwood Manor Road
Roydon Near Diss Norfolk(GB)**

(72) Inventor: **Green, Ralph Edward
Flat 2a, 29 Brunswick Square
Hove Sussex(GB)**

(72) Inventor: **Landymore, Barry William
16 Waveney Heights
Brockdish Near Diss Norfolk(GB)**

(74) Representative: **Matthews, Heather Clare et al,
Keith W Nash & Co Pearl Assurance House 90-92 Regent
Street
Cambridge CB2 1DP(GB)**

(54) Apparatus for transporting small livestock.

㊼ Apparatus for use in transporting small livestock, comprises a frame (36), and a plurality of drawers (10) for holding the livestock and adapted to be received in the frame in one or more columns and/or rows, each drawer having a base (24) and side walls (12, 14), the side walls being formed substantially entirely of a grid of spaced ribs (16, 18, 20) of generally planar, elongate configuration oriented with the plane of each rib extending transversely to the plane of the respective wall, the frame having horizontal bars for supporting the drawers at their bottom edges, the arrangement being such that when the drawers are received in the frame part of the base of each drawer extends below the top of the horizontal bars supporting the drawer.

FIG.11.

Croydon Printing Company Ltd.

Title:  Apparatus for transporting small livestock.

DESCRIPTION.

Field of invention.

This invention relates to apparatus for use in transporting small livestock, particularly poultry such as chickens.

Background to the invention.

Containerised transportation of small livestock is becoming more widely used nowadays.  In a typical system for transporting chickens from farms where they are raised to a central processing plant where they are slaughtered and processed, chickens are transported in containers comprising a framework or housing carrying a plurality of slidably removable open-topped drawers.  Birds are loaded into the drawers at a farm, filled containers are then transported by lorry to a central processing plant where the birds are then removed from the drawers for processing.  The empty containers are washed and sterilised ready for re-use.

Such systems are described in, for example, British Patent Specification No. 2050309 and our British Patent Specification No. 2096555.

Known drawers for use in such systems are of metal or plastics material of single-skin construction. The drawers generally have a solid base, with the side walls being apertured for ventilation purposes.

Only a limited degree of ventilation is achieved with the known drawers, and use of such drawers in hot climates leads to ventilation problems with attendant risks of livestock suffocating due to lack of oxygen.

A further problem which arises in practice is the possibility of drawers moving relative to the carrying frame during transportation. To this end, complex locking arrangements have been devised, for example as disclosed in British Patent Specification No. 2049401.

It is accordingly an object of the present invention to provide apparatus for transporting small livestock which overcomes or at least mitigates the problems noted above.

The invention.

According to the present invention there is provided apparatus for transporting small livestock, comprising a frame, and a plurality of drawers for holding the livestock and adapted to be received in the frame in one or more columns and/or rows, each drawer having a base and side walls, the side walls being formed substantially entirely of a grid of spaced ribs of generally planar, elongate configuration oriented with the plane of each rib extending transversely to the plane of the respective wall, the frame having horizontal bars for supporting the drawers at their bottom edges, the arrangement being such that when the drawers are received in the frame part of the base of each drawer extends below the top of the horizontal bars supporting the drawer.

In use of such apparatus, because the drawers are received in the frame in such a way that part of the base of each drawer extends below the top of the horizontal bars supporting the drawer, this relationship acts in a simple way to retain the drawers in position relative to the frame.

Further, the ribbed construction of the drawer side walls provides a greater degree of ventilation than has hitherto been possible.

The degree of ventilation of the drawers can be varied by adjusting the size and spacing of the ribs, and a very high degree of ventilation can be achieved if desired. The ribbed construction of the side walls enables a drawer of great structural strength to be produced, even in embodiments having a high degree of ventilation.

The side walls are conveniently in the form of a rectilinear grid of ribs, orientated to extend at right-angles to the plane of the wall.

The base of each drawer may also be ribbed on its underside for strength, with the ribs conveniently being arranged in a rectilinear grid pattern.

Each drawer preferably includes recessed regions at opposed edges of the drawer adapted to receive and engage members of the carrying frame to assist in retaining the drawer in the frame.

In a typical embodiment, the carrying frame comprises an array of horizontal and vertical bars secured together to define an open framework, the overall shape of which resembles the shell of a chest of drawers, for receiving, say, three side-by-side columns of four superposed drawers, one drawer deep. The drawers are typically rectangular in plan and are received lengthwise in the frame, i.e. with the smaller side accessible at the front.

With such an arrangement, the front and rear edges of the drawer (i.e. opposed smaller edges) include recessed regions on the underside, such that when the drawer is inserted into the framework the recessed regions cause the drawer to drop down slightly relative to the framework with a horizontal face of each recessed region engaging the relevant crossbar at the front and rear of the opening. If the drawer is moved forwardly (or rearwardly) in a horizontal direction in this position, the rear face of the front recessed region will engage the front crossbar, preventing the drawer from being directly removed from the frame in this way. If the drawer is to be removed from the frame, the drawer must be lifted slightly relative to the frame to enable the rather deeper central portion of the base to clear the front crossbar.

The drawer when located in the frame may additionally be supported at the sides on appropriate members of the frame: such support will additionally prevent sideways movement of the drawer relative to the frame.

The recessed regions thus act to retain the drawer in a frame to a certain degree, preventing or at least substantially reducing the risk of the drawer inadvertently or unintentionally being removed from the frame, for example by being jolted during transportation on a lorry.

The arrangement is very simple, with no moving parts and merely requires simple modification in drawer design.

The recessed regions may be of generally square or rectangular section. Preferably, however, the inner face of the recessed region is inwardly inclined to facilitate removal of the drawer from the frame.

In embodiments where the underside of the drawer is ribbed, as described above, recesses are conveniently formed by terminating the relevant ribs just short of the appropriate edge to provide a stepped configuration. The edges of the ribs are preferably inwardly inclined for the reasons discussed above.

The upper rim, at the top of each drawer, preferably has appropriate dimensions and configuration such that two (or more) drawers can be stacked together one on top of another, with the upper rim of a lower drawer located in the recessed regions at the base of an upper drawer. For stacking to be possible, it is clear that the base of the drawers must be cut away to provide an appropriate recessed region on all four edges.

The drawers are conveniently made of plastics material, preferably high density polyethylene, which may be coloured as desired. In this case, the drawers are conveniently produced by a conventional injection moulding technique.

The floor of the drawer may be of solid configuration or openwork construction.

Openwork floors, for example constituted by a grid of cross-members, possibly with downwardly extending ribs on the underside of the drawer for strengthening purposes, are appropriate for drawers for use in hot climates because of the additional ventilation thus provided. The spacing of the cross-members is selected bearing in mind the type and size of animal to be transported in a particular drawer. For example, for a drawer for use in transporting chickens the bars should be reasonably close together so that there is no risk of the feet of the birds passing through the holes and getting stuck. An incidental advantage of such an openwork floor arrangement is that an animal, such as a chicken, can grip the grid with its feet. This provides the animal with a greater degree of stability so that there is little likelihood of the animal skidding on the floor or losing its grip during transportation, for example when a transporting lorry is going round a sharp corner, and possibly falling over and being trampled or suffocated. This feature results in animals arriving at a processing plant in better condition.

Solid floors are appropriate for use in colder climates and indeed are required under EEC regulations to prevent animal droppings from falling to a drawer below. The underside of the floor may be ribbed for strength, as discussed above. Further, slightly raised portions may be provided on the upper face of the drawer, for example in the form of a grid of protrusions, to enable animals such as birds to grip the floor for the reasons discussed above. The raised portions are preferably sufficiently closely spaced together so that each animal can grip the floor.

In the case of drawers for handling chickens, typically dimensions in plan of a rectangular drawer for 1165mm by 762mm. Such a drawer is produced in two heights: 219mm for smaller birds and 254mm for larger birds. It is found that two height sizes are necessary as it is important that the birds have sufficient height that they are not cramped, but not so much height that they are able to climb on top of one another.

The frame preferably extends below the lowermost horizontal drawer-supporting bars to allow the forks of a fork lift truck to enter beneath the frame to enable the apparatus to be lifted.

The apparatus is preferably such that when the drawers are received in the frame, any gaps between the top of a drawer and the frame or between the top of a drawer and an adjacent drawer are no greater in height than the gaps between the ribs of the drawer.

In a further aspect, the present invention provides a drawer for use in transporting small livestock, wherein the side walls of the drawer are formed substantially entirely of a grid of spaced ribs of generally planar, elongate configuration orientated with the plane of each rib extending transversely to the plane of the wall.

The present invention also provides a drawer for use with a carrying frame for transporting small livestock wherein the underside of the drawer includes recessed regions at opposed edges of the drawer adapted to receive and engage members of the carrying frame to assist in retaining the drawer in the frame.

The invention will be further described, by way of example, with reference to the accompanying drawings in which:

Figure 1 is a perspective view of a drawer with an openwork base for use in apparatus embodying the present invention;

Figure 1a shows a detail of Figure 1 to an enlarged scale;

Figure 2 is an end elevation of the drawer of Figure 1;

Figure 3 is a side elevation of the drawer of Figure 1;

Figure 4 is a section on line 4-4 of Figure 2, shown to an enlarged scale;

Figure 5 shows a detail of Figure 3 to an enlarged scale;

Figure 6 shows two drawers of the construction shown in Figure 1, stacked one on top of each other;

Figure 7 shows the detail of Figure 6 to an enlarged scale and in section;

Figure 8 shows the underside of the drawer of Figure 1;

Figure 9 shows a detail of the floor of the drawer of Figure 1 to an enlarged scale;

Figure 10 is a view similar to Figure 9 showing an alternative floor configuration;

Figure 11 illustrated a plurality of drawers such as those illustrated in Figure 1 located in a carrying frame; and

Figure 12 is a detail of Figure 11 to an enlarged scale.

Detailed description of the drawings.

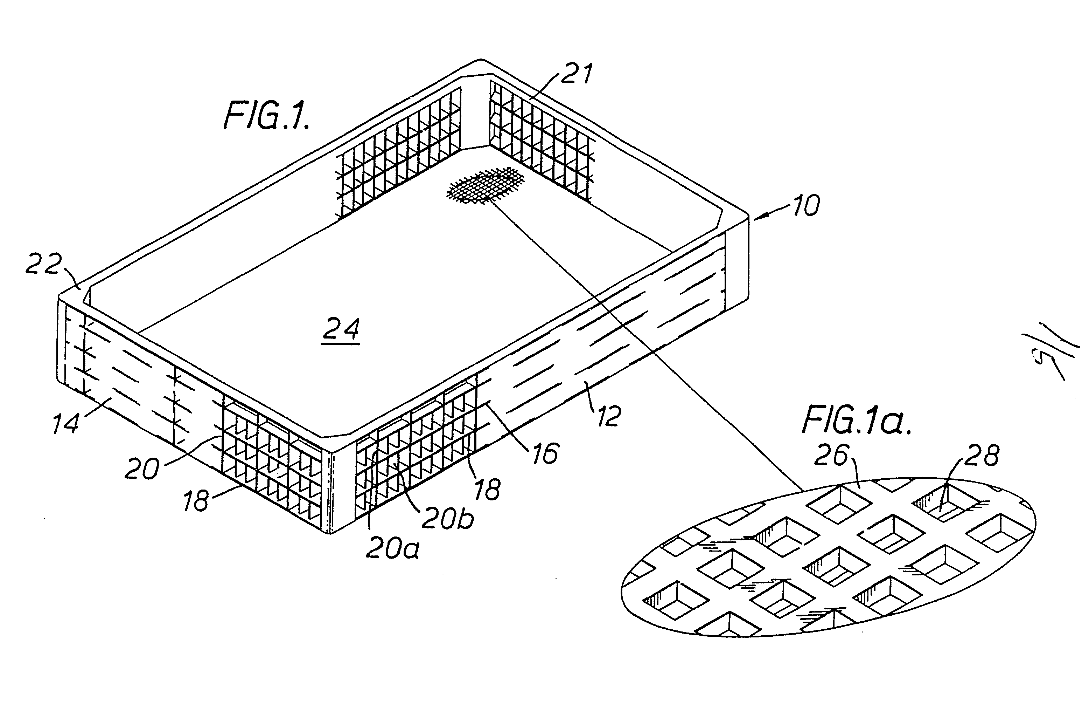

Referring to the drawings, Figures 1 to 5 and 9 illustrated one embodiment of an open-topped drawer 10 for use with apparatus in accordance with the present

invention.

The illustrated drawer 10 is of generally rectangular configurations in plan and has the following dimensions:

| | |
|---|---|
| Length | 1165mm |
| Width | 762mm |
| Height | 219mm |

The drawer comprises high-density polyethylene, coloured and stabilised, e.g. orange, and is formed by an injection moulding technique.

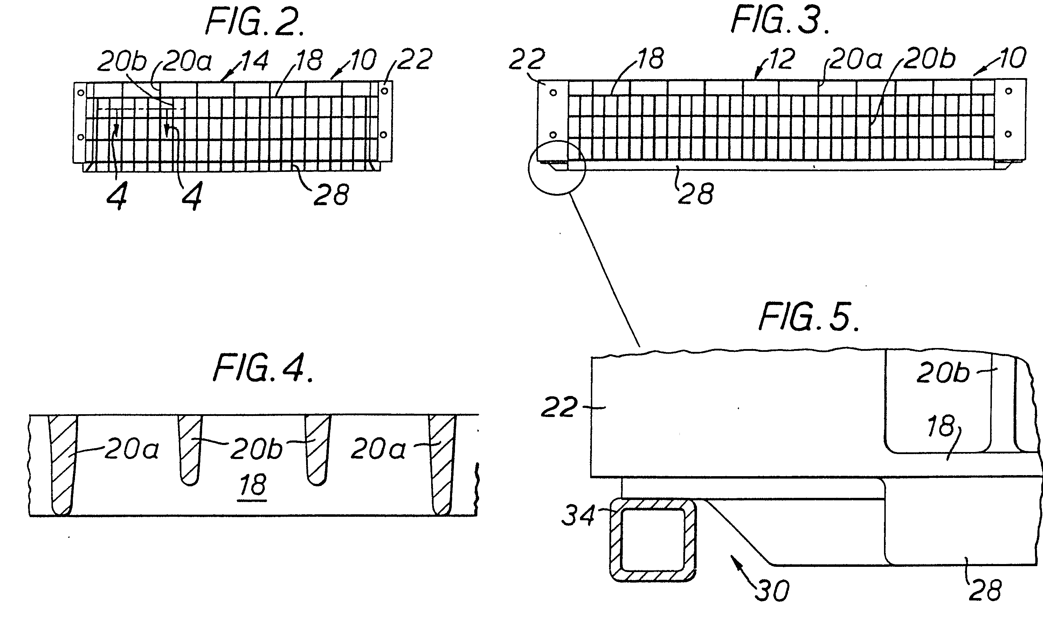

The major side walls 12 and minor side walls 14 of the drawer are of similar construction, each comprising a rectilinear grid of horizontal and vertical elongate planar ribs 16 oriented with the plane of the ribs extending at right-angles to the general plane of the walls. Each side wall comprises five spaced-apart horizontal ribs 18 all of similar length and width. These are linked by vertical ribs 20 which fall into two categories: a number of ribs 20a extend the full height of the side wall and have a width equal to that of the horizontal ribs 18; and between each of these ribs 20a are located two smaller ribs 20b which do not extend the full height of the side wall and are also narrower. This feature can best be seen in Figures 2 and 4.

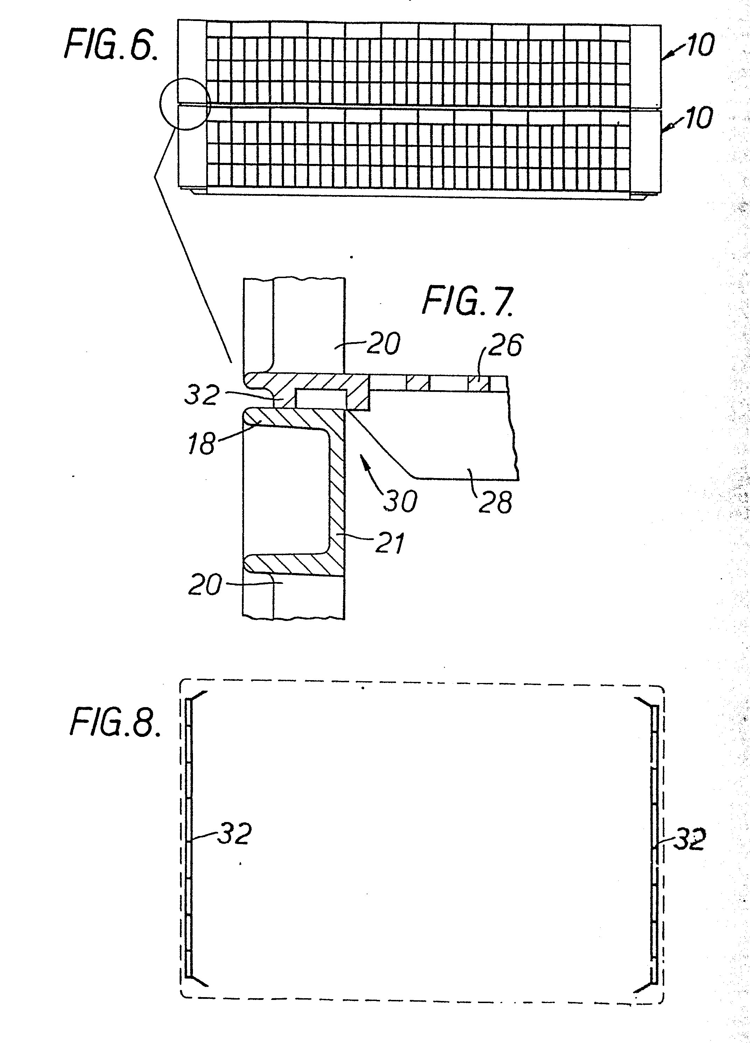

The two uppermost horizontal ribs 18 are linked on their inner edges by a wall 21 (Figure 7) to provide a solid upper rim to the drawer, which can be used as a handhold.

The side walls 12 and 14 are linked by corner-pieces 22 of solid construction.

The floor or base 24 of the drawer is also of openwork construction, and comprises a rectilinear grid of bars 26. The underside of the floor is ribbed with two orthogonal series of ribs 28 extending downwardly from the underside. A first series of ribs extends along the length of the drawer, aligned with the vertical ribs 20 of the minor side walls 14, as shown in Figure 2, and a second series of more widely spaced ribs extend across the width of the drawer. (For clarity the ribs on the underside of the floor are not shown in Figure 1.)

The first series of ribs on the underside of the floor, extending along the length of the drawer, do not extend across the full length, terminating inward of the edge of the drawer as shown in Figure 5. The outermost ribs 28 are cut short by a fairly substantial degree. The inner ribs 28 are also cut short, but to a lesser extent, and have edge faces inclined at an angle of 45°, as shown in Figures 5 and 7.

These truncated inner ribs 28 define recesses 30 at opposed ends of the drawer 10, the recesses being bounded in part by horizontal faces comprising supporting load strips 32 as illustrated in Figures 5, 7 and 8. The recesses 30 are dimensioned to co-operate with the upper rim of a similar drawer 10 to permit a plurality of drawers 10 to be stacked one on top of each other as illustrated in Figures 6 and 7.

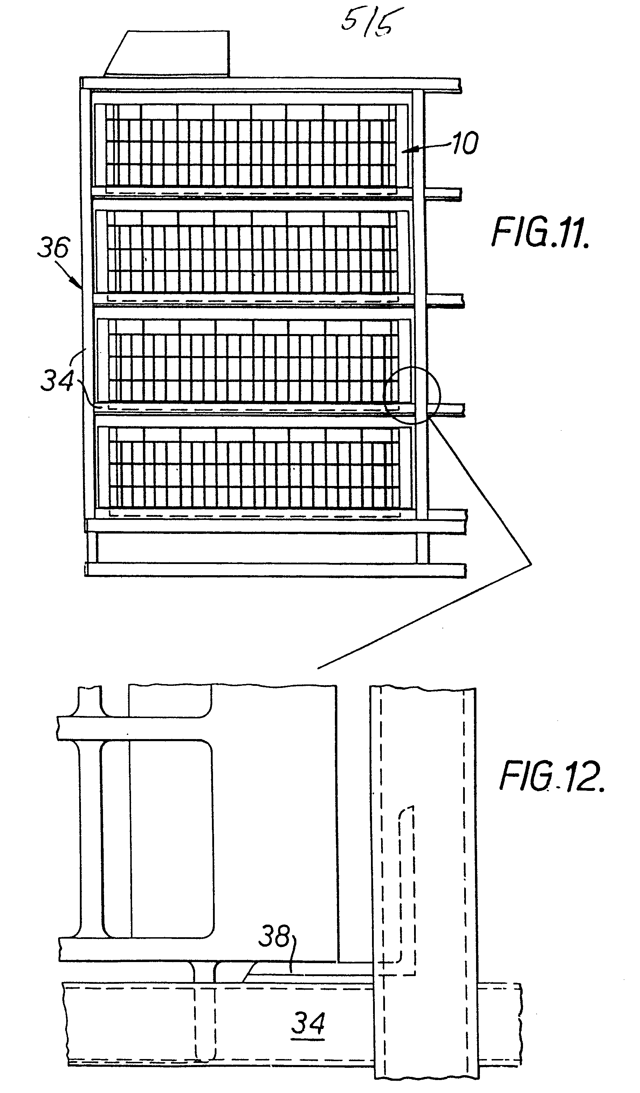

The recess 30 also co-operate with cross-members 34 of a carrying frame 36 (Figures 5 and 11) for retaining the drawer in position relative to the frame, as will be described below.

The drawer 10 is intended for use in transporting livestock, particularly poultry, and is designed for use with carrying frame 36 as illustrated in Figure 11.

The frame 36 comprises an array of horizontal and vertical bars of members 34 of hollow square cross-section, connected together to form an open framework the overall shape of which resembles the shell of a chest of drawers. The illustrated frame 36 is adapted to receive a series, for example three, columns of four superposed drawers, one drawer deep, with the drawers received lengthwise in the frame. One such column of drawers is illustrated in Figure 11.

Drawers 10, for example containing chickens for transportation from a farm to a processing plant, are slid into an appropriate opening in the frame 36. The protruding ribs 28 on the underside of the floor slide over the front cross-member at the base of the opening. When the drawer is in position within the frame, with the recesses 30 in the base of the drawer located over the front and rear cross-members 34, the drawer can drop down slightly until the supporting load strips 32 are engaged and supported by the cross-members 34, as illustrated in Figure 5. This engagement prevents movement of the drawer relative to the frame in a forwards or rearwards direction. In this position, side flats on the base of the drawer, located outboard of the outermost longitudinal rib 28, are additionally supported on side rails 38 of the frame (Figure 12) preventing sideways movement of the drawer relative to the frame.

As will be apparent, the drawer needs to be lifted slightly relative to the frame in order to be removed therefrom. This arrangement, in particular the cooperation of the recesses 30 in the base of the drawer with the cross-members 34 at the front and rear of the frame opening, acts to retain the drawer in the frame to a certain degree, preventing or at least substantially reducing the likelihood of the drawer inadvertently or unintentionally being removed from the frame during transportation, for example by being jolted when being carried on a lorry.

In this illustrated embodiment, approximately 70% of the area of the side walls and base of the drawer are open, thus providing for a high degree of ventilation. This drawer is thus suitable for use in warm or hot climates.

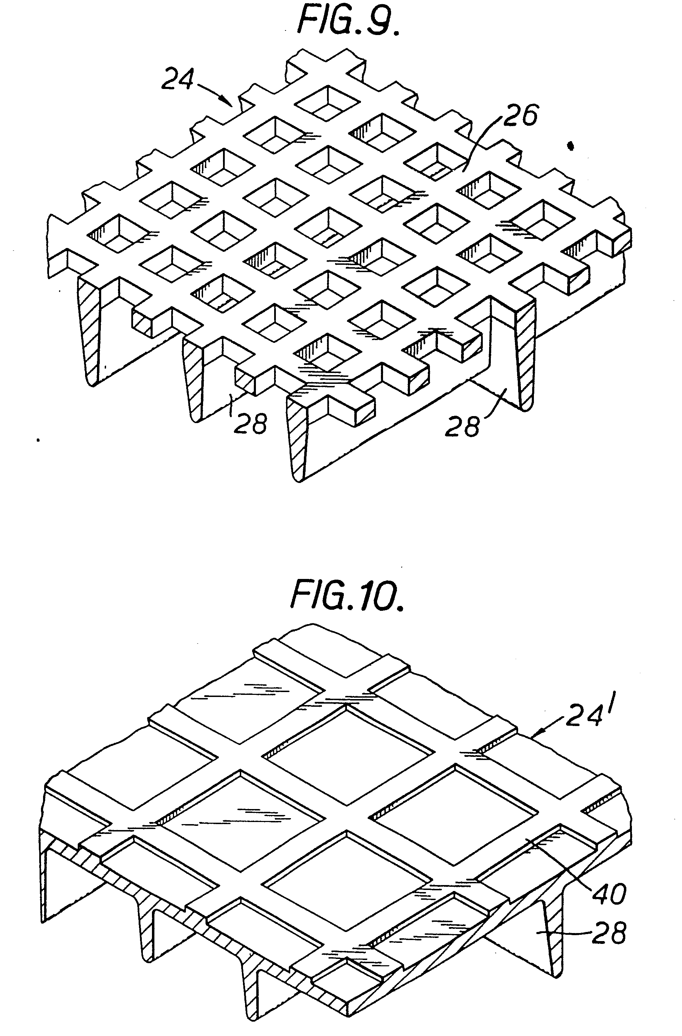

An alternative arrangement of floor or base 24' is illustrated in Figure 10. This alternative floor is of solid construction and has ribs 28 on its underside as with the previous floor 24. In addition, a rectilinear grid of raised portions 40 is provided on the upper face of the floor for enabling improved grip by animals, as discussed above. The drawer having a solid floor of such construction is suitable for use in cooler climates, and in particular in EEC countries.

In all other respects, the solid-based drawer is identical to the openwork floor embodiment as described above.

The range of drawers is completed by two additional drawers having higher side walls, with a height of 254mm instead of 219mm. The larger drawers are available with both solid and openwork floors.

CLAIMS

1.    Apparatus for transporting small livestock, comprising a frame (36), and a plurality of drawers (10) for holding the livestock and adapted to be received in the frame inone or more columns and/or rows, each drawer having a base (24) and side walls (12,14), the side walls being formed substantially entirely of a grid of spaced ribs (16,18,20) of generally planar, elongate configuration oriented with the plane of each rib extending transversely to the plane of the respective wall, the frame having horizontal bars for supporting the drawers at their bottom edges, the arrangement being such that when the drawers are received in the frame part of the base of each drawer extends below the top of the horizontal bars supporting the drawer.

2.    Apparatus according to claim 1, wherein the side walls of the drawers are each in the form of a rectilinear grid of ribs (16,18,20), oriented to extend at right-angles to the plane of the wall.

3.    Apparatus according to claim 1 or 2, wherein each drawer includes recessed regions (30) at opposed edges of the base of the drawer adapted to receive and engage the horizontal bars (34) of the frame to assist in retaining the drawers in the frame.

4.    Apparatus according to claim 3, wherein the underside of each drawer is ribbed (28), and the recesses are formed by terminating the relevant ribs just short of the appropriate edge to provide a stepped configuration.

5. Apparatus according to claim 3 or 4, wherein the upper rim, at the top of each drawer, is of appropriate dimensions and configuration such that two (or more) drawers can be stacked together one on top of another, with the upper rim of a lower drawer located in the recessed regions at the base of an upper drawer.

6. Apparatus according to any one of the preceding claims, wherein the drawers are made of plastics material.

7. Apparatus according to any one of the preceding claims, wherein the base of each drawer is of openwork construction.

8. Apparatus according to any one of claims 1 to 6, wherein the base of each drawer is of solid configuration.

9. Apparatus according to claim 8, wherein slightly raised portions are provided on the upper face of the base in the form of a grid of protrusions.

10. Apparatus according to any one of the preceding claims, wherein the frame extends below the lowermost horizontal drawer-supporting bars to allow the forks of a fork lift truck to enter beneath the frame to enable the apparatus to be lifted.

FIG.1.

FIG.1a.

0108613

## FIG.2.

20b 20a 14 18 10 22

4 4 28

## FIG.3.

22 18 12 20a 20b 10

28

## FIG.4.

20a 20b 20a

18

## FIG.5.

20b

22

18

34

30 28

2/5

0108613

0108613

3/5

FIG.6.

10

10

FIG.7.

20

26

32

18

30

28

21

20

FIG.8.

32

32

# FIG.9.

# FIG.10.

0108613

FIG.11.

FIG.12.

0108613

European Patent Office

**EUROPEAN SEARCH REPORT**

Application number

EP 83 30 6696

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,D | EP-A-0 061 869 (ANGLIA AUTOFLOW) <br> * Figures 1a,2; pages 4,8 * | 1,6,10 | A 01 K 31/07 <br> A 01 K 45/00 <br> B 65 D 85/50 |
| Y | US-A-3 687 330 (HEROLZER) <br><br> * Figures 1-8; column 2, line 12 - column 5, line 47 * | 1,2,5, 8 | |
| A | US-A-3 930 467 (FIER) <br><br> * Figures 1,2,7,8,16,17; column 2, line 18 - column 4, line 26; column 5, line 52 - column 6, line 28 * | 1,2,4, 7 | |

TECHNICAL FIELDS SEARCHED (Int. Cl. ³)

A 01 K

The present search report has been drawn up for all claims

| Place of search | Date of completion of the search | Examiner |
|---|---|---|
| THE HAGUE | 06-02-1984 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82